# EUROPÄISCHE PATENTANMELDUNG

(11) **EP 0 775 921 A1**
(43) Veröffentlichungstag der Anmeldung: **28.05.1997**
(21) Anmeldenummer: 96116291.4
(22) Anmeldetag: 11.10.1996
(51) Int. Cl.: G01S 17/93

(54) **Vorrichtung zur Abstandsbestimmung von Fahrzeugen**

(30) Priorität: 21.11.1995 DE 19543402
(71) Anmelder: Bayerische Motoren Werke Aktiengesellschaft, 80788 München (DE)
(72) Erfinder: Donges, Edmund, Dr., 82256 Fürstenfeldbruck (DE)

(57) **Zusammenfassung**

Bei einer Vorrichtung zur Abstandsbestimmung von Fahrzeugen, bei dem von einem Fahrzeug aus zwei Strahlenfächer, bestehend aus mehreren in einer Ebene verlaufenden Laserstrahlen, mit unterschiedlichem Elevationswinkel in Richtung eines anderen Fahrzeugs ausgesandt und die reflektierten Laserstrahlen empfangen sind, ist der in die gewünschte Entfernung gerichtete Strahlenfächer aktiviert und für die Bestimmung der Entfernung mittels einer den Empfängern zugeordneten Auswerteschaltung dominant berücksichtigt, während der andere Strahlenfächer nicht oder mit deutlich geringerem Gewicht berücksichtigt ist.

## Beschreibung

Die Erfindung bezieht sich auf eine Vorrichtung mit den Merkmalen des Oberbegriffs von Patentanspruch 1.

Eine derartige Vorrichtung ist aus der DE 4123056 A1 bekannt. Die beiden Strahlenfächer sind stets aktiv. Bedingt durch die Fahrbahnneigung und/oder die Neigung des Fahrzeugs absolut bzw. relativ zur Fahrbahn kann der Strahlenfächer mit der größeren Neigung zu tief und/oder der Strahlenfächer mit der kleineren Neigung zu hoch verlaufen. Im Extremfall kann ein vorausfahrendes Fahrzeug zumindest vorübergehend nicht erfaßt werden. Zwar ist es möglich, dem Problem abzuhelfen, indem ein motorischer Antrieb für die Strahlenfächer erzeugenden Laserquellen die Strahlenfächer optimal ausrichtet. Dies ist jedoch mit einem konstruktiven Aufwand verbunden.

Der Erfindung liegt die Aufgabe zugrunde, eine Vorrichtung der eingangs genannten Art zu schaffen, bei dem ohne besonderen Aufwand ein vorausfahrendes Fahrzeug stets optimal detektiert wird.

Die Erfindung löst diese Aufgabe durch die kennzeichnenden Merkmale des Patentanspruchs 1.

Bei der Erfindung ist stets nur der Strahlenfächer wirksam bzw. trägt dominierend zur Abstandsbestimmung bei, der unter dem jeweils richtigen Elevationswinkel ausgesandt ist. Es spielt nun keine besondere Rolle, ob der andere Strahlenfächer überhaupt kein Hindernis erfaßt oder aber aufgrund seiner starken Neigung ein störendes Bodenecho erzeugt.

Unter wirksam ist dabei zu verstehen, daß die Sender des Strahlenfächers aktiviert sind und eine den Empfängern nachgeschaltete Auswerteschaltung das mit den Empfängern aufgenommene Signal auswertet. Im Gegensatz dazu bedeutet unwirksam, daß der Strahlenfächer nicht ausgesandt und/oder die Empfänger nicht aktiviert sind.

Wie bei der DE 41 23 056 A1 können die Strahlenfächer vertikal und horizontal mit Zwischenraum ausgesandt werden. Die einzelnen Laserstrahlen treffen vorausbefindliche Objekte punktförmig. Demgegenüber ergeben sich Verbesserungen hinsichtlich der Erkennung dann, wenn die Strahlenfächer vertikal ohne Zwischenraum und/oder die Laserstrahlen jedes Strahlenfächers ohne seitlichen Zwischenraum ausgesandt sind. Ein Objekt kann dann nicht den Laserstrahlen entgehen, sofern es sich in dem von den Strahlenfächern bestrahlten Raum befindet.

Die Aktivierung der Strahlenfächer kann auf unterschiedliche Weise vorgenommen sein. Im einfachsten Fall kann hierzu ein Neigungsgeber vorgesehen sein, der die absolute Neigung des Fahrzeugs bestimmt. Damit ist es erkennbar, ob das Fahrzeug z.B. bergauf oder bergab fährt und eine Mulde oder eine Kuppe bei Übergang in den horizontalen Straßenverlauf zu erwarten ist. Auch läßt sich damit der Beladungszustand erkennen.

Demgegenüber ergibt sich eine Verbesserung dann, wenn die Aktivierung der Strahlenfächer durch Auswerten der Reflexionen des Strahlenfächers mit der größten Neigung erfolgt. Die vorher genannten unerwünschten Bodenechos dienen nun dazu, den Straßenverlauf zu erkennen und aus der Information über der Auftreffstelle des Strahlenfächers mit der größten Neigung die Notwendigkeit abzuleiten, ggf. auf den Strahlenfächer mit geringerem Elevationswinkel umzuschalten. Ergänzend oder alternativ kann auch der Strahlenfächer mit der geringsten Neigung ausgewertet werden. Ergeben sich damit keine Reflexionen, ist das Fahrzeug zu stark beladen.

Auch ist es möglich, die Aktivierung der Strahlenfächer mit Hilfe eines Navigationssystems zu steuern. Voraussetzung hierfür ist, eine Information über Steigung und Gefälle eines Streckenabschnitts im Navigationssystem vorzuhalten. Aus dem jeweiligen Standort und dem aus dem Navigationssystem hervorgehenden Streckenverlauf läßt sich dann die jeweils erforderliche Auswahl des wirksamen Strahlenfächers treffen.

Ergänzend zu zwei Strahlenfächern kann auch ein dritter, vierter usw. Strahlenfächer mit dem gegenüber unterschiedlichem Elevationswinkel vorgesehen sein. Mit Hilfe von mehreren derartigen Strahlenfächern, die übereinander verlaufen, läßt sich das Bestrahlungsfeld präzise und vollständig untersuchen und ein eventuelles Hindernis einwandfrei erkennen.

Anhand der Zeichnung ist die Erfindung weiter erläutert. Es zeigt
- Fig. 1: schematisch den Einfluß einer Fahrbahnsteigung auf eine erfindungsgemäße Vorrichtung,
- Fig. 2: den Einfluß eines Gefälles auf die Vorrichtung und
- Fig. 3: schematisch eine erfindungsgemäße Vorrichtung im Querschnitt.

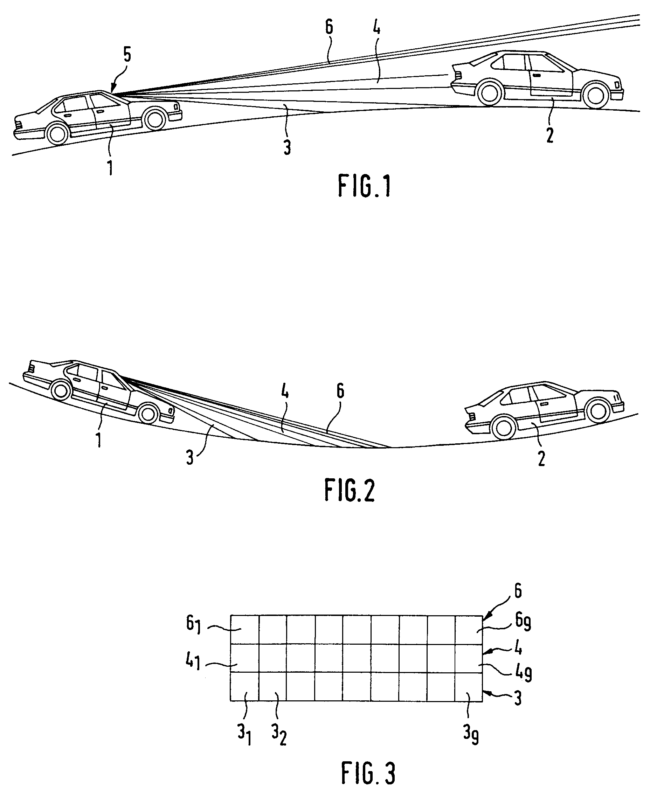

Im Fig. 1 ist eine Fahrbahnsteigung gezeigt. Ein Fahrzeug 1, das mit einer Vorrichtung zur Abstandsbestimmung ausgestattet ist, fährt hinter einem Fahrzeug 2, das ein zu detektierendes Hindernis darstellt. Die Vorrichtung besteht aus zwei Strahlenfächern, die im Querschnitt gezeigt sind und die aus einem Nah-Strahlenfächer 3 mit größerer Neigung und einem Fern-Strahlenfächer 4 mit geringer Neigung besteht. Die Strahlenfächer 3 und 4 bestehen jeweils aus mehreren in einer Ebene verlaufenden einzelnen Laserstrahlen analog DE 41 23 056 A1, die von einer Quelle 5 ausgehen und in die gewünschte Richtung ausgelenkt sind. Zur Verdeutlichung sind die Strahlenfächer 3 und 4 mit einem deutlich voneinander verschiedenen Elevationswinkel dargestellt. Es ist ohne weiteres zu erkennen, daß das Fahrzeug 2 im dargestellten Fall nicht detektiert wird.

Dasselbe gilt dann, wenn das Fahrzeug 1 auf einer abschüssigen Fahrbahn fährt. Das Fahrzeug 2 wird ebenfalls nicht erkannt.

Anders verhält er sich, wenn die Strahlenfächer 3 und 4 vertikal aneinander anschließen und die einzelnen Laserstrahlen 3₁ bis 3₉ und 4₁ bis 4₉ jeweils seitlich ohne Zwischenraum ausgesandt sind. Der in Fig. 3 dargestellte Querschnitt zeigt die Situation schematisch. Zusätzlich ist in Fig. 3 ein weiterer Strahlenfächer 6 dargestellt, der ebenfalls aus einzelnen Laserstrahlen 6₁ bis 6₉ besteht und der vertikal an den Strahlenfächer 4 anschließt. Der Übersichtlichkeit halber ist zwischen den einzelnen Strahlenfächern kein Zwischenraum dargestellt.

Mit einer derartigen Vorrichtung, bei der die einzelnen Laserstrahlen lückenlos ausgesandt sind, ist es möglich, ein vorausbefindliches Objekt eindeutig zu erkennen. Voraussetzung hierfür ist eine geeignete Wahl des Elevationswinkels für die Strahlenfächer 3, 4 und 6.

Um die Erkennbarkeit eines Objekts und den hierzu erforderlichen schaltungstechnischen Aufwand möglichst gering zu halten, ist von den Strahlenfächern nur jeweils derjenige aktiviert, der in Richtung des vorgesehenen Untersuchungsbereichs ausgesandt ist. Bezogen auf Fig. 1 bedeutet dies, daß dies bei einer Steigung der Strahlenfächer 4 ist, der zwischen den beiden extremen Strahlenfächern verläuft. Im Fall des Gefälles (Fig. 2) ist dies der Strahlenfächer 6, der den kleinsten Elevationswinkel besitzt.

Anstelle der Aktivierung nur eines Strahlenfächers können auch mehrere benachbarte aktiviert werden. Dabei werden von den zugehörigen Empfängern, die das reflektierte Lichtsignal aufnehmen, nur die bewertet, deren Strahlenfächer unter dem erforderlichen Elevationswinkel ausgesandt sind. Anstelle der Aktivierung nur eines Strahlenfächers bzw. nur der Empfänger eines Strahlenfächers können auch mehrere Strahlenfächer bzw. zugehörige Empfänger aktiviert sein. Für die Auswertung ist es dann lediglich erforderlich, die Strahlen und Empfänger dominant im Ergebnis zu berücksichtigen, die dem erforderlichen Elevationswinkel zugeordnet sind.

Die Steuerung der jeweiligen wirksamen Strahlenfächer kann durch einen Neigungsgeber, ein Navigationssystem oder durch Auswertung des Strahlenfächers (3) mit größter Neigung erfolgen. Dabei werden die Bodenechos hinsichtlich des zu ermittelnden Auftreffpunkts der Laserstrahlen ausgewertet.

## Patentansprüche

1. Vorrichtung zur Abstandsbestimmung von Fahrzeugen, bei dem von einem Fahrzeug aus zwei Strahlenfächer, bestehend aus mehreren in einer Ebene verlaufenden Laserstrahlen, mit unterschiedlichem Elevationswinkel in Richtung eines anderen Fahrzeugs ausgesandt und die reflektierten Laserstrahlen empfangen sind, dadurch gekennzeichnet, daß der in die gewünschte Entfernung gerichtete Strahlenfächer (3, 4, 6) aktiviert und für die Bestimmung der Entfernung mittels einer den Empfängern zugeordneten Auswerteschaltung dominant berücksichtigt ist, während der andere Strahlenfächer nicht oder mit deutlich geringerem Gewicht berücksichtigt ist.

2. Vorrichtung nach Anspruch 1, dadurch gekennzeichnet, daß die Aktivierung der Strahlenfächer durch Wirksamschaltung der zugehörigen Empfänger erfolgt.

3. Vorrichtung nach Anspruch 1 oder 2, dadurch gekennzeichnet, daß die Laserstrahlen jedes Strahlenfächers ohne seitlichen Zwischenraum ausgesandt sind.

4. Vorrichtung nach einem der Ansprüche 1 bis 3, dadurch gekennzeichnet, daß die Strahlenfächer vertikal ohne Zwischenraum ausgesandt sind.

5. Vorrichtung nach einem der Ansprüche 1 bis 4, dadurch gekennzeichnet, daß die Aktivierung der Strahlenfächer durch einen Neigungsgeber des Fahrzeugs erfolgt.

6. Vorrichtung nach einem der Ansprüche 1 bis 4, dadurch gekennzeichnet, daß die Aktivierung der Strahlenfächer durch Auswerten der Reflexionen des Strahlenfächers (3) mit der größten Neigung erfolgt.

7. Vorrichtung nach einem der Ansprüche 1 bis 6, dadurch gekennzeichnet, daß die Aktivierung der Strahlenfächer (3, 4, 6) durch ein Navigationssystem gesteuert ist.

8. Vorrichtung nach einem der Ansprüche 1 bis 7, dadurch gekennzeichnet, daß ein dritter Strahlenfächer (6) analog zu den ersten beiden Strahlenfächern aktivierbar ist und der dritte Strahlenfächer einen demgegenüber unterschiedlichen Elevationswinkel besitzt.
